# EUROPEAN PATENT APPLICATION

(11) **EP 2 277 683 A1**
(43) Date of publication of application: **26.01.2011**
(21) Application number: 10251045.0
(22) Date of filing: 04.06.2010
(51) Int. Cl.: B29C 63/10

(54) **Decorative tape winding device**

(30) Priority: 14.07.2009 JP 2009165289
(71) Applicant: Bandai Co., Ltd., Tokyo 111-8081 (JP)
(72) Inventor: Kikuchi, Seiji, Tokyo (JP); Tatsumoto, Kazue, Tokyo (JP); Kato, Kimiko, Tokyo (JP); Ono, Hiroko, Tokyo (JP); Kojima, Eriko, Tokyo (JP)
(74) Representative: Hopkin, Tobias J.B.

(57) **Abstract**

A tape winding device is provided that can wind a decorative tape in a spiral on to the circumference of a cylindrical object. When a cylindrical object 11 is inserted and pushed in the axial direction into a rotating and forwarding mechanism 3, the cylindrical object 11 is forwarded and given a rotation in one direction by the rotating and forwarding mechanism 3. When the end of a decorative tape 12, which is drawn out from a tape ring 12A held in a decorative tape holding mechanism 4, which is mounted at an inclination to axis line O of cylindrical object 11, is stuck to the starting part for winding the tape on to the cylindrical object 11 and cylindrical object 11 is again pushed and rotated and forwarded in the axial direction, decorative tape 12is pulled out consequent upon this rotating and forwarding and wound in a spiral on the circumference of the cylindrical object 11.

## Description

This invention relates to a decorative tape winding device that can wind decorative tape in a spiral on a cylindrical object such as a writing implement like a pencil and also such as drumsticks and the like.

Hitherto, generally known technology whereby a desired decoration is put on a writing implement is, for example, that where a decorative sheet is wound round the outside circumference of a writing implement as shown in JP 2006-150622 and, in addition, by winding round on top of it a heat shrink film the writing implement is decorated with such things as a favourite pattern, design or colour.

As stated above, with the conventional technology a decorative sheet was wound on the outside of the writing implement. One end of this winding was fixed by sticking it to the other end with paste or the like. Then the decorative sheet was covered with a heat shrink film and it was mounted by heat shrinking. Therefore the work became complicated.

Furthermore, as the winding round of the decorative sheet and heat shrink film was done by hand, good and bad workmanship resulted depending on the individual differences in skill with the fingers. In particular, when children and the like were doing it, this difference was very apparent and it was very difficult to obtain an identical finish.

Therefore this invention is one that provides a decorative tape winding device with which the work of mounting can be done simply and, moreover, virtually the same finish can be achieved irrespective of the individual skill with the fingers.

The decorative tape winding device of this invention is principally **characterised in that** it is provided with a rotating and forwarding mechanism, which forwards and imparts a rotation in one direction to the cylindrical object through pushing the cylindrical object in the axial direction, and a decorative tape holding mechanism, which holds the decorative tape at an inclination to the axis line of the cylindrical object that is rotated and forwarded by the rotating and forwarding mechanism. In the state where the end of the decorative tape held in the decorative tape holding mechanism has been stuck on to the first part for winding the decorative tape on to the cylindrical object that is rotated and forwarded by the rotating and forwarding mechanism, the decorative tape that is held in the decorative tape holding mechanism is drawn out consequent upon the rotating and forwarding of the cylindrical object by the rotating and forwarding mechanism and the decorative tape can be wound round in a spiral on the circumference of the cylindrical object.

When the cylindrical object is inserted into the rotating and forwarding mechanism, the cylindrical object is forwarded and given a rotation in one direction by the rotating and forwarding mechanism. Thus by sticking the end of the decorative tape held by the decorative tape holding mechanism to the starting place for winding the tape on to the cylindrical object and rotating and forwarding the cylindrical object further and rotating it in one direction, the decorative tape held in the decorative tape holding mechanism is drawn out consequent upon the rotating and forwarding of the cylindrical object and it is wound round in a spiral on the circumference of the cylindrical object.

Consequently, after the operator has stuck the end of the decorative tape to the starting place for winding the decorative tape on to the cylindrical object as previously described, the decorative tape can be wound on to the circumference of the decorative tape evenly simply by the operation of pushing the cylindrical object forward into the rotating and forwarding mechanism or pulling the cylindrical object from midway in the forwarding direction and the decorative tape can be mounted on the cylindrical object in a simple operation.

Moreover, because the cylindrical object is pushed or else pulled from midway, the decorative tape can be fitted on with a virtually identical finish irrespective of individual differences in skill with the fingers even with children and the like.

The invention will now be described by way of non-limiting example with reference to the accompanying drawings, in which:
Fig.1 is an oblique view showing the form of a first practical embodiment of the decorative tape winding device relating to this invention;
Fig.2 is an oblique view showing the state where the tape winding device shown in Fig.1 is in use;
Fig.3 is a plan view of Fig.2;
Fig.4 is an expanded oblique view of part of the rotating and forwarding mechanism of Fig.3;
Fig.5 is an explanatory abridged side view of the rotating and forwarding mechanism; and
Fig.6 is a plan view showing the form of a second embodiment of this invention.

A form of an embodiment of this invention together with diagrams is explained in detail.

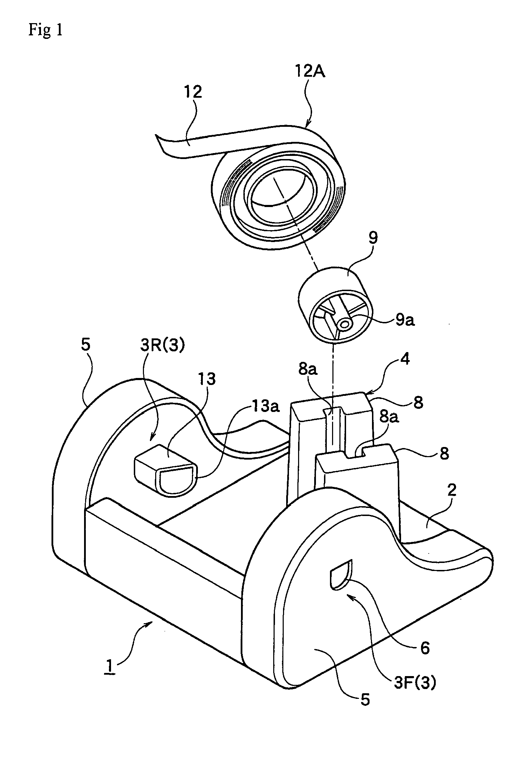

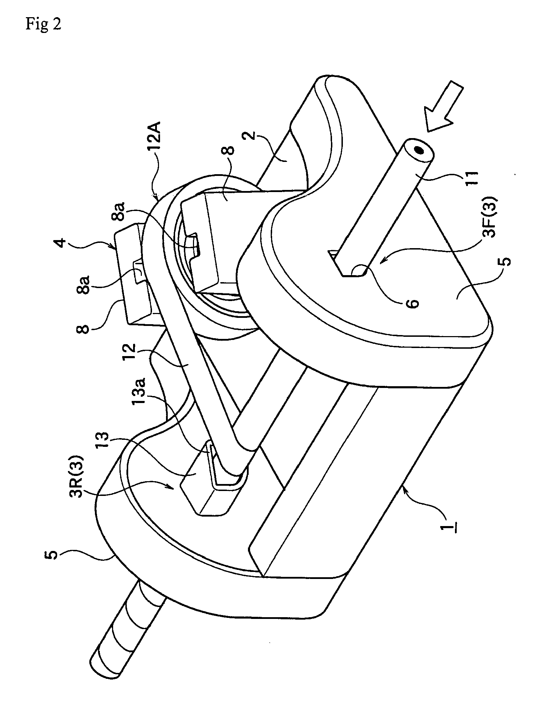

Decorative tape winding device 1 in the first form of embodiment shown in Fig.1 to Fig.5 is provided with a base section 2 and a rotating and forwarding mechanism 3 for cylindrical object 11 and a decorative tape holding mechanism 4, which holds tape ring 12A of decorative tape 12 upright.

The base section 2, rotating and forwarding mechanism 3 and decorative tape holding mechanism 4 are integrally formed of a suitable synthetic resin.

The base section 2 is made with a flat board shape, for example a square shape, so that it can be put with stability on a desk or table or the like.

The rotating and forwarding mechanism 3 is fitted integrally with the desired thickness and width on said base section 2 and it is provided at cylindrical object holding walls 5, which hold cylindrical object 11.

The rotating and forwarding mechanism 3, is provided with insertion hole 6, which runs through in the thickness width direction in the cylindrical object holding wall 5 and where cylindrical object 11 is inserted, and a plurality of support points 7, for example three of them, which support the outer circumference of cylindrical object 11 at roughly equal spacing and support the cylindrical object 11 roughly in a central position with the ability to rotate in the insertion hole 6.

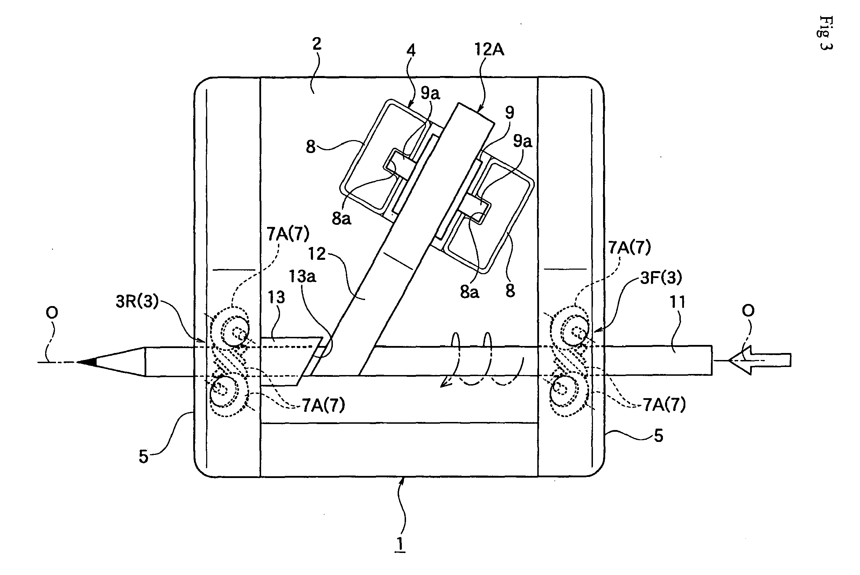

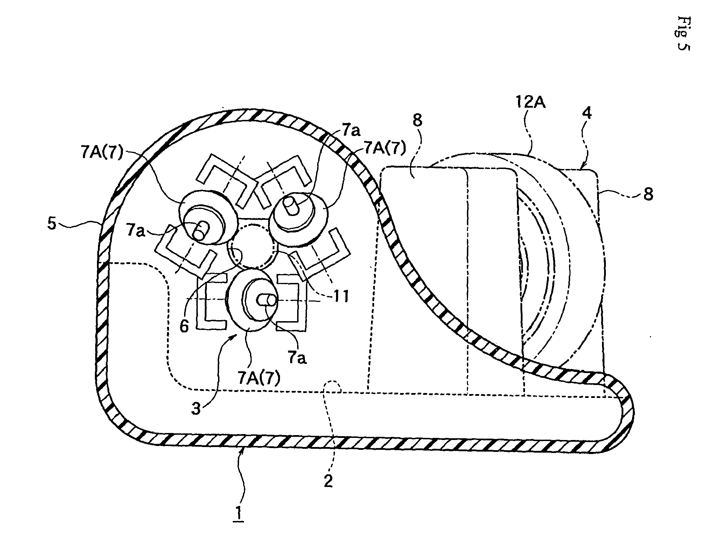

At least one support point 7 out of the three support points 7 is formed by guide roller 7A, which is located at an inclination to axis O of the cylindrical object 11 as shown in Fig.3 toFig.5 and rotates through the force of friction from pressing against the cylindrical object 11 and makes the cylindrical object 11 rotate in one direction.

In this form of embodiment said three support points 7 are formed by guide rollers 7A, all positioned inclined at the same angle and in the same direction of inclination to axis O of cylindrical object 11.

These guide rollers 7A are made of an elastic material such as soft rubber or synthetic resin and are supported with the ability to rotate inside the insertion hole 6. They are positioned so that, when cylindrical object 11 is inserted into insertion hole 6, they are in elastic contact with the circumference of the cylindrical object 11 and a force of friction occurs in the place of contact.

Furthermore, at least one guide roller 7A out of the guide rollers 7A that form the three support points 7 is made able to move a little in the radial direction of the cylindrical object 11. This is achieved by, for example, making the bearing hole, outside the diagram, where support shaft 7a of guide roller 7A engages, slightly elongated.

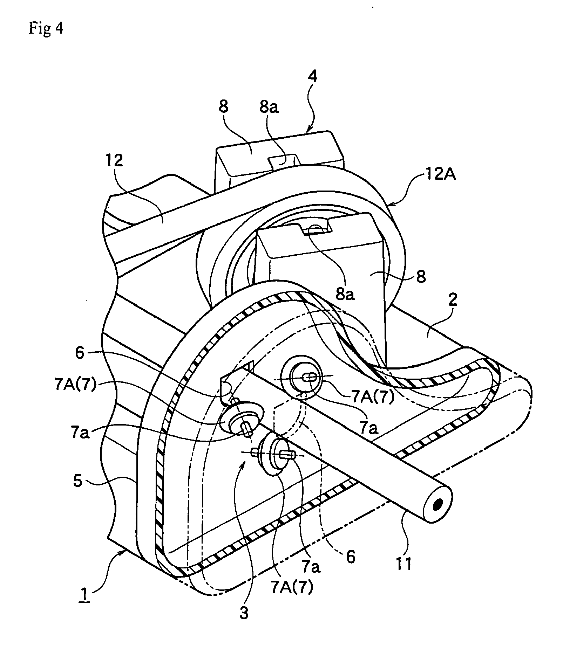

The decorative tape holding mechanism 4 is mounted on the base section 2 at the side of cylindrical object 11 that is forwarded by the rotating and forwarding mechanism 3. As the tape ring 12A is kept at an inclination to axis line O of a cylindrical object 11 that is forwarded by the rotating and forwarding mechanism 3, the decorative tape holding mechanism 4 in this form of embodiment is fitted at the same inclination and the same angle as the guide rollers 7A to axis line O of cylindrical object 11 (of. Fig.3 and Fig.4).

This decorative tape holding mechanism 4 is provided with a pair of supporting legs 8, which are fitted integrally at the required spacing on base section 2, and tape reel 9, which is carried with the ability to rotate between these supporting legs 8.

Shaft reception grooves 8a with a length to match the height of the position of insertion hole 6 on the cylindrical object holding wall 5 are formed facing each other in the sides of the supporting legs 8 from their upper edge. Support shaft 9a of the tape reel 9 is formed so that the shaft can be supported with the ability to be inserted or removed in the up/down direction in these shaft reception grooves 8a.

The decorative tape 12 has printed on its surface a suitable colour, pattern or design or the like and it has an adhesive on the reverse side. Tape ring 12A is formed by winding many layers round on the core of the ring.

A number of types of tape ring 12A of decorative tape 12 are prepared and used by inserting them in the axial direction on the tape reel 9 as desired.

In this form of embodiment, the cylindrical object holding walls 5 in which the rotating and forwarding mechanism 3 is formed are provided as a pair facing each other along the left and right side edges of base section 2. The decorative tape holding mechanism 4 is positioned in the region between these left and right cylindrical object holding walls 5, that is, in the region between rotating and forwarding mechanisms 3R,3F.

Insertion guide 13, which guides the end of cylindrical object 11 to the central position of rotating and forwarding mechanism 3R, is provided integrally around the insertion hole 6 on the side part. In more detail, it is provided on the side surface of the inner side of cylindrical object holding wall 5, on the side where cylindrical object 11 enters at least the rotating and forwarding mechanism 3R of rotating and forwarding mechanism 3 which is positioned rearwardly, namely on the rear side in the direction in which the cylindrical object 11 is forwarded.

The insertion guide 13 is made in a tubular shape. Its inner circumference is formed in a taper widening towards the exterior. It is made so that, even if the end of cylindrical object 11 which is rotated and forwarded from the front side rotating and forwarding mechanism 3F oscillates, it is captured by insertion guide 13 and the entry (insertion) can be guided to the central position of the rearward rotating and forwarding mechanism 3R.

Furthermore, the projecting length of the insertion guide 13 is set to lie roughly on the extension of the side edge of tape ring 12A, which is held in the decorative tape holding mechanism 4. The end part is cut at the same angle of inclination as the angle of inclination of the tape ring 12A and it is configured as tape winding guide edge 13a that can be in rubbing contact with one side edge of decorative tape 12 that is wound on to cylindrical object 11.

Next, a detailed explanation will be given for the case where, using the decorative tape winding device 1 configured as above, decorative tape 12 is wound round the circumference of cylindrical object 11, such as a pencil with a circular cross section, for example.

First of all, the desired tape ring 12A is chosen from a number of tape rings 12A that have been prepared and this is put into and held by decorative tape holding mechanism 4. In concrete terms, shafts 9a of tape reel 9 are slid out upwards from the shaft reception grooves 8a of the pair of support legs 8 a tape reel 9 is taken out from support legs 8. The selected tape ring 12A is put on to the tape reel 9 and said tape ring 12A is fitted and held with the ability to rotate in support legs 8 by the support shafts 9a and shaft reception grooves 8a.

Next, the end of the cylindrical object 11 is inserted in the forwarding direction into insertion hole 6 of front rotating and forwarding mechanism 3F.

Then, the 3 guide rollers 7A, which form the support point 7, ride on the circumference of cylindrical object 11 and the end of the cylindrical object 11 is supported roughly in the central position of insertion hole 6.

Next, when cylindrical object 11 is inserted, the guide rollers 7A rotate because of the force of friction with the circumference of the cylindrical object 11 and a rotation in the opposite direction to that of guide rollers 7A is imparted to cylindrical object 11 (cf. Fig.3). The cylindrical object 11 is rotated and forwarded at a virtually fixed pitch corresponding to the angle of inclination of guide rollers 7A.

The end part of cylindrical object 11, which is forwarded while being rotated from front side rotating and forwarding mechanism 3F, draws out decorative tape 12 from tape ring 12A that is held in the decorative tape stand 4 in a position where it reaches the vicinity of insertion guide 13 of the rearward rotating and forwarding mechanism 3R and its end is stuck on so as to be wound on a little on to the end circumference surface of cylindrical object 11.

Then, when cylindrical object 11 is again pushed in a forwarding direction, consequent on the rotating and forwarding of the cylindrical object 11, the decorative tape 12 is drawn out (dragged, pulled out) from tape ring 12A. The decorative tape 12 is wound round the outer surface of cylindrical object 11 evenly in a spiral and, in addition, the front end part of the cylindrical object 11 goes into insertion guide 13, oscillation of the front end part is controlled, and it goes into insertion hole 6 of the rearward rotating and forwarding mechanism 3R and is guided to the central position of the rearward rotating and forwarding mechanism 3R.

When the end part of cylindrical object 11 is thus inserted in the rearward rotating and forwarding mechanism 3R, the cylindrical object 11 is held and supported by both front and rear rotating and forwarding mechanisms 3F and 3R and stable rotating and forwarding can be carried out. In addition, one side edge of the decorative tape 12 is in rubbing contact with tape winding guide edge 13a, where the end part of insertion guide 13 is inclined at an angle, and winding the decorative tape 12 on in a spiral can be done still more evenly.

Then, when the rear end of the cylindrical object 11 has passed out from the front side rotating and forwarding mechanism 3F, the rotating and forwarding of cylindrical object 11 is continued at a virtually fixed pitch by said rearward rotating and forwarding mechanism 3R by pushing the rear end that has come out in the direction of the rearward rotating and forwarding mechanism 3R or by pulling the front end part of cylindrical object 11 that has passed in through the rearward rotating and forwarding mechanism 3R in the direction of forwarding of the cylindrical object 11.

In the position where the rear end of cylindrical object 11 has reached the vicinity of the insertion guide 13 and decorative tape 12 has been wound round up to the rear end of said cylindrical object 11, the decorative tape 12 is cut by a cutter (not shown in the diagram). If the cylindrical object 11 is drawn out while rotating from the rearward rotating and forwarding mechanism 3R, the winding of decorative tape 12 on to the surface of the cylindrical object 11 is completed and a cylindrical object 11 can be obtained that is covered by the desired decorative tape 12.

Then, if a decorative seal (not shown in the diagram) for preventing winding is stuck on (wound on) to the end part of the winding of decorative tape 12 on the end part of the cylindrical object 11 as required, the end part of the winding of the decorative tape 12 can be prevented from peeling off.

As another example of mounting on the cylindrical object 11, a seal (omitted from the diagram) printed with a suitable pattern or message, for example, is stuck on to decorative tape 12 that has been wound in a spiral on to the surface of cylindrical object 11, as described above, and using the same decorative tape winding device 1, colourless and transparent or coloured and transparent decorative tape is wound in a spiral on to the whole length of cylindrical object 11 or in the required region in front of and behind where the seal is stuck on.

Through this, the pattern or message of the seal can be mounted so as to appear to be floating on a background consisting of the decorative tape 12. Moreover, the seal can be prevented from peeling off by the transparent decorative tape and an artistic design effect and an original and high quality cylindrical object 11 can be obtained.

Through the decorative tape winding device 1 of this form of embodiment, as described above, when a cylindrical object 11 is inserted into insertion hole 6 of rotating and forwarding mechanism 3, the cylindrical object 11 can be given a rotation in one direction and forwarded by the rotating and forwarding mechanism 3. Thus if the end of decorative tape 12 is drawn out from tape ring 12A held in decorative tape holding mechanism 4 and stuck to the starting part for tape winding on the cylindrical object 11 and the cylindrical object 11 is rotated and forwarded, decorative tape 12 can be drawn out (pulled out, dragged) from tape ring 12A consequent upon the rotating and forwarding of the cylindrical object 11 and wound around evenly in a spiral on the surface of the cylindrical object 11. Therefore, the cylindrical object 11 can have the desired colour, pattern or design and the like mounted on it.

Moreover, after the operator has stuck the end of decorative tape 12 to the starting part for winding on the cylindrical object 11, as described above, the cylindrical object 11 is pushed into rotating and forwarding mechanism 3, or the cylindrical object 11 is pulled from midway in the forwarding direction, and by this action alone the decorative tape 12 can be wound round evenly in a spiral on the outside of the cylindrical object 11. Therefore, the cylindrical object 11 can have the desired decorative tape 12 mounted on it by a simple operation.

Accordingly, even children can fit a decorative tape 12 with an almost identical finish, irrespective of their individual skill with the fingers.

In particular, in this form of an embodiment, the rotating and forwarding mechanism 3 is provided with a plurality of support points 7, which support cylindrical object 11 roughly in the central position inside insertion hole 6 into which the cylindrical object 11 is pushed. At least one support point 7 is formed by a guide roller 7A, which is placed at an inclination to axis line O of the cylindrical object 11, rotates through the force of friction by being pressed by the cylindrical object 11 and makes the cylindrical object 11 rotate in one direction. Because of this, the rotating and forwarding of cylindrical object 11 through rotation on account of the friction with the guide roller 7A is done with a virtually fixed pitch. Through this, decorative tape 12 can be wound round evenly in a spiral at the angle of placement of tape ring 12A irrespective of increases/decreases in the push force on cylindrical object 11. In short, the cylindrical object 11 is rotated and forwarded while the guide roller 7A always keeps cylindrical object 11 in the required position irrespective of the push force on cylindrical object 11 and therefore there are no failures even with children who are unable to control increases/decreases in the push force on cylindrical object 11 well.
Furthermore, as at least one of the rollers 7A can move a little in the radial direction of the cylindrical object 11, even if cylindrical object 11, besides being formed with a circular cross section, is formed with a multilateral cross section such as a triangular shape or hexagonal shape with the same external radius, proper rotating and forwarding of cylindrical object 11 can be done through rollers 7A following in the radial direction along the peripheral surface.

As the rotating and forwarding mechanisms 3 are arranged as at least a pair in positions facing each other at the requisite spacing on the base section, in the process of rotating and forwarding the cylindrical object 11, it is held and supported by both of these and stable rotating and forwarding can be carried out.

Moreover, as decorative tape holding mechanism 4 is situated in the region between the pair of rotating and forwarding mechanisms 3, the decorative tape 12, which is wound round in a spiral on cylindrical object 11, can be pressed by the rearward rotating and forwarding mechanism 3R on to the circumference of the cylindrical object 11 on which decorative tape 12 is wound on in this spiral in the forwarding direction of cylindrical object 11 and decorative tape 12 can be given an excellent finish.

Furthermore, as tubular insertion guide 13 is provided on the side part of the side where the cylindrical object 11 enters into rearward rotating and forwarding mechanism 3R, even if the tip part of cylindrical object 11 forwarded from front side rotating and forwarding mechanism 3F oscillates somewhat, it is captured by the insertion guide 13 and can be guided into the central position of rearward rotating and forwarding mechanism 3R, and the cylindrical object 11 can be smoothly rotated and forwarded.

In addition, the tip part of the insertion guide 13 is formed at roughly the same angle of inclination as the angle of inclination of placement of tape ring 12A held in the decorative tape holding mechanism 4 and forms tape winding guide 13a that can be in rubbing contact with one side edge of the decorative tape 12 that is wound on to cylindrical object 11.Therefore, one side edge of the decorative tape 12, which is drawn out (dragged, pulled out) from said tape ring 12A consequent upon the rotating and forwarding of cylindrical object 11, is in rubbing contact with the tape winding guide 13a. Accordingly, the winding angle of the decorative tape 12 in the position where it approaches cylindrical object 11 is kept fixed, and winding decorative tape 12 on in a spiral can be done still more evenly.

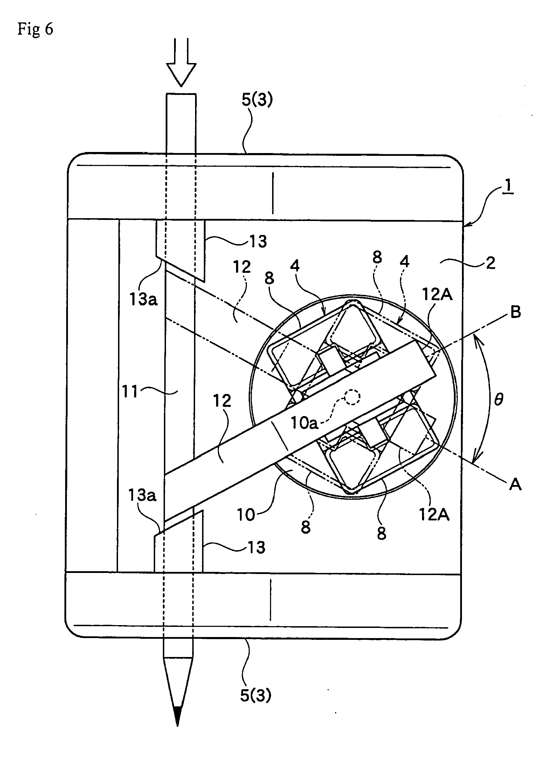

Fig.6 shows a second form of an embodiment of this invention. In this embodiment, the angle of the decorative tape holding mechanism 4 can be moved on the base section 2 and its position can be adjusted.

As shown, the pair of supporting legs 8 of the decorative tape holding mechanism 4 is set on a moveable plate 10 and is formed as a separate body from base section 2.

The moveable base plate 10 is connected with the ability to rotate and slide on base section 2 via a support shaft 10a in a position in the centre of the pair of support legs 8.

The movement of this moveable plate 10 is restricted to the scope of angle θ between inclination position A of decorative tape stand 4 in the first form of embodiment and inclination position B, the symmetrically opposite line to this by means (not shown in the diagram) of a stopper or a rotation limiting mechanism (click mechanism) that can maintain the stopped position by the engagement with each other of projections and recesses in the sliding surface and base section 2.

Consequently, if the position of decorative tape holding mechanism 4 is adjusted to the inclination position B, that is the reverse of inclination position A in the first embodiment, cylindrical object 11 can be inserted in the opposite direction to that in the first form of embodiment into rotating and forwarding mechanism 3 and pushed, and decorative tape 12 can be fitted on in a spiral in the reverse direction.

Through this it can accommodate an operator who is either right handed or left handed and this can give increased convenience.

In this case, if insertion guide 13 is also put on to the front side rotating and forwarding mechanism 3F in a similar position to insertion guide 13 on rearward rotating and forwarding mechanism 3R, then oscillation of the front end part of the cylindrical object 11 can be coped with, even with rotating and forwarding the cylindrical object 11 from the opposite side and control of the winding angle of decorative tape 12 can be done by tape winding guide edge 13a.

If the decorative tape holding mechanism 4 can have its position adjusted by moving the angle with the base section 2, as in this second embodiment, then, if the position can be adjusted in small units of angle by a click mechanism or the like, the winding angle of decorative tape 12 can be adjusted at will, and the appearance of the spiral winding of decorative tape 12 can be varied.

In the embodiments, an example was shown where the rotating and forwarding mechanism 3 was provided as a pair of mechanisms 3F,3R. However, in another arrangement, only one mechanism may be provided. In this case, the position for locating the decorative tape holding mechanism 4 may be either in front of or behind the rotating and forwarding mechanism 3 in the direction of the forwarding the cylindrical object 11.

Furthermore, any of the plurality of support points 7 for the rotating and forwarding mechanism 3 may consist of a guide roller 7A, which is in elastic contact with the circumference of cylindrical object 11 and rotates through friction resistance. However, one or two support points 7 may consist of guide roller 7A and the other support points 7 can be made as balls that rotate in elastic contact with the circumference of cylindrical object 11 or projections that are fixed inside insertion hole 6.

In addition, the plurality of support points 7 can be positioned at either the front or the rear of insertion hole 6 and can be made to increase the stability of support for cylindrical object 11.

Furthermore, in practical embodiments of the invention, a cutter for decorative tape 12 may be put in a position close to insertion guide 13 for the cylindrical object 11 and the operation of cutting the tape on completion of winding on decorative tape 12 can be made easy.

Explanation of the Symbols
- 1: decorative tape winding device
- 2: base section
- 3: rotating and forwarding mechanism
- 3F: front side rotating and forwarding mechanism
- 3R: rearward rotating and forwarding mechanism
- 4: decorative tape holding mechanism
- 6: insertion hole
- 7: support point
- 7A: guide roller
- 11: cylindrical object
- 12: decorative tape
- 12A: tape ring
- 13: insertion guide
- 13a: tape winding guide edge
- O: axis line of cylindrical object

## Claims

1. A decorative tape winding device, **characterised in that** it is provided with:
a rotating and forwarding mechanism, which forwards and imparts a rotation in one direction to a cylindrical object upon pressure in the axial direction of the cylindrical object; and
a decorative tape holding mechanism, which holds decorative tape at an inclination to the axis line of the cylindrical object that is rotated and forwarded by the rotating and forwarding mechanism;
wherein the decorative tape may be held in said decorative tape holding mechanism such that, when it is stuck on to a starting part for the decorative tape winding on the cylindrical object, the decorative tape is paid out as a result of the rotating and forwarding of the cylindrical object and the decorative tape is wound round in a spiral on the circumference of the cylindrical object.

2. The decorative tape winding device as claimed in Claim 1, **characterised in that** the rotating and forwarding mechanism is formed of guide roller that support the cylindrical object with the ability to rotate upon pushing of the cylindrical object and are set at an inclination to the axis line of the cylindrical object.

3. The decorative tape winding device as claimed in Claim 1 or 2, **characterised in that** the rotating and forwarding mechanism has a plurality of support points that support a cylindrical object roughly in a central position inside an insertion hole of the rotating and forwarding mechanism in which the cylindrical object is inserted; and at least one support point consists of a guide roller positioned at an inclination to the axis line of the cylindrical object.

4. The decorative tape winding device as claimed in Claim 2 or 3, **characterised in that** at least one guide roller can move in a radial direction of the cylindrical object.

5. The decorative tape winding device as claimed in any one of Claims 1 to 4, **characterised in that** the decorative tape holding mechanism is positioned on a base section of the device such that it is at a side of a cylindrical object that is rotated and forwarded by the rotating and forwarding mechanism, which is also positioned on said base section.

6. The decorative tape winding device as claimed in Claim 5, **characterised in that** the rotating and forwarding mechanism is composed of at least a pair of rotating and forwarding mechanisms that are set at a requisite spacing on said base section; and the decorative tape holding mechanism is positioned in the region between the pair of rotating and forwarding mechanisms.

7. The decorative tape winding device as claimed in Claim 6, **characterised in that** an insertion guide, which has a tubular shape and guides the tip of a cylindrical object to the central position of the rotating and forwarding mechanism, is provided on at least the one of the rotating and forwarding mechanisms that is positioned rearwardly relative to the direction of forwarding of the cylindrical object on the side part where a cylindrical object enters the rotating and forwarding mechanism.

8. The decorative tape winding mechanism as claimed in Claim 7, **characterised in that** an end part of said insertion guide is formed at an angle of inclination roughly the same as the angle of inclination of the placement of said decorative tape holding mechanism; and it is configured to provide a tape winding guide edge, with which one side edge of the decorative tape that is wound on a cylindrical object can be in rubbing contact with the tape winding guide edge.

9. The decorative tape winding device as claimed in any one of Claims 5 to 8, **characterised in that** said decorative tape holding mechanism is arranged such that its position may be adjusted in order to change its angle relative to the said base section.
